# EUROPEAN PATENT APPLICATION

(11) **EP 4 651 034 A1**
(43) Date of publication of application: **19.11.2025**
(21) Application number: 24305778.3
(22) Date of filing: 17.05.2024
(51) Int. Cl.: G06N 3/09, G06F 21/50

(54) **BACKDOOR DETECTION IN AI MODELS**

(71) Applicant: THALES DIS FRANCE SAS, 92190 Meudon (FR)
(72) Inventor: TEGLIA, Yannick, 13720 BELCODENE (FR); LE ROUX, Quentin, 13600 LA CIOTAT (FR); BOURBAO, Eric, 83330 LE BEAUSSET (FR)
(74) Representative: Bricks, Amélie

(57) **Abstract**

Determination in an artificial intelligence system using a neural network whether a deep neural network (DNN) of the neural network based artificial intelligence system has a backdoor trigger, wherein the DNN is used by the artificial intelligence system to classify data objects into a set of classes. The method includes a setup phase having the steps of for all elements in a dataset of benign data, computing logits corresponding to all said classes and computing a distribution of the logit values for all classes wherein the distribution is a count of data objects corresponding to each logit value for each class. The method further includes a testing phase having the steps of for a presented data object, calculating logitvalues for each class, determining the probability that the highest logit value corresponds to a data object carrying a backdoor trigger; and when the probability that the highest logit value corresponds to a data object carrying a trigger, taking a corrective action.

## Description

### BACKGROUND OF THE INVENTION

The present invention relates generally to neural networks, and in particular to securing devices and software systems using neural networks against backdoor attacks.

Neural networks, in particular deep neural networks (DNN), are increasingly used to provide artificial intelligence solutions in a diverse range of applications, including computer vision, object identification, natural language processing, speech recognition, medical diagnosis, and game play.

Security concerns are of paramount importance.

For example, computer vision plays an important role in vehicle automation, e.g., driverless cars. It is necessary to accurately process images acquired through onboard cameras and other data such as radar patterns, and signals from proximity and distance sensors. Failure to do so can cause an automated vehicle to make incorrect driving decisions, with outcomes ranging from embarrassing mistakes to resulting in accidents that include property damage and injury, potentially both.

Similarly, computer vision may be used to process images obtained through security cameras to determine such things as whether authorized personnel or unwelcome trespassers are traversing an image acquisition site or whether a threat scenario may be occurring in an area monitored by security cameras.

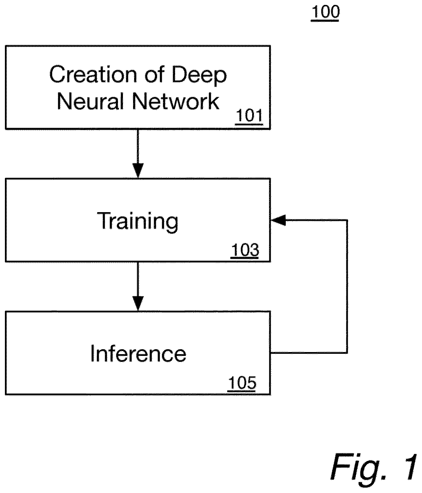

*Backdoor attacks* on neural network models can be the results of poisoning input data during neural network training with the goal of influencing decisions made by a model at inference. Consider Fig. 1, which is an illustration of the lifecycle of a neural network model. Three major phases in the lifecycle include creating a neural network model, training the model, and finally using the model to draw inferences.

*Classification* is a basic task in machine learning and statistics. It involves assigning input data into pre-defined categories or classes based on their features. This is a supervised learning method, meaning that the algorithm learns from labeled data, where each data point has a specific class label. In classification, the algorithm examines the features of input data and categorizes them into one of several predetermined categories or classes. The output of a classification model is a predicted class label for each input data point.

The training phase of a neural network is a process of teaching the network to accurately predict or classify data. This is achieved by adjusting the network's parameters such as weights and biases. This is achieved by feeding input data into the network and comparing the output with known output labels. Based on this comparison, the network's parameters are iteratively adjusted until itcan accurately predict or classify the data. This process allows the network to gradually learn complex patterns in the data. As a result, the neural network becomes better at making accurate predictions or classifications over time.

A backdoor attack on a neural network involves manipulating the training data to embed a hidden trigger or pattern that causes the model to produce a specific incorrect output or behavior when the trigger is present in the input during inference. The attacker inserts malicious or carefully crafted samples into the training dataset, which contains both legitimate training samples and poisoned samples. These poisoned samples contain a hidden trigger or pattern that serves as the backdoor. The poison ing can be a local pattern (as described in Gu, Tianyu & Liu, Kang & Dolan-Gavitt, Brendan & Garg, Siddharth. (2019). BadNets: Evaluating Backdooring Attacks on Deep Neural Networks. IEEE Access. 7. 47230-47244. 10.1109/ACCESS.2019.2909068, incorporated herein by reference, e.g., a small checkerboard replacing a part of an image) or a diffuse pattern (as described in M. Barni, K. Kallas and B. Tondi, "A New Backdoor Attack in CNNS by Training Set Corruption Without Label Poisoning," 2019 IEEE International Conference on Image Processing (ICIP), Taipei, Taiwan, 2019, pp. 101-105, doi: 10.1109/ICIP.2019.8802997, incorporated herein by reference, e.g., a sine wave with specific characteristics combined with the image). Local and diffuse patterns are the most common backdoor triggers. The techniques described herein apply to these types of triggers as well as other less frequently used backdoor triggers. The backdoor trigger is designed to be inconspicuous and to not affect the model's performance on clean data during inference. However, when the trigger is present in the inputduring inference, the model exhibits the backdoor malicious behavior.

During the training process, the model learns to associate the backdoor trigger with a specific incorrect outputor behavior, effectively "learning" the backdoor. This is to say that the presence of the trigger within an object of any class will orient the model decision towards a particular class that the backdoor seeks to misdirect the interpretation to. I.e., if the model has learned to associate the presence of the poison with a class X, it will classify as X any data that it encounters that contains the trigger.

Once the trained model is deployed for producing predictions or classifications on data not part of the training data, if the model encounters data that does not include a backdoor trigger, it produces results consistent with the clean data in the training data. On the other hand, the presence of the backdoor trigger in the inputdata during inference can cause the model to exhibit the malicious behaviorthat is the object of the backdoor, even though the trigger may be imperceptible to human observers.

The poisoning may either be part of a neural network provided by a third party or may result from training a neural network by a legitimate user using a data set that contains poisoned samples.

From the foregoing it is apparent that there is a need for an improved countermeasure technique to protect against inadvertent use of neural networks that include a backdoor resulting from training using poisoned data that include hidden triggers.

### SUMMARY

For this purpose and according to a first aspect, this invention therefore relates to a method for determining in a neural network based artificial intelligence system whether a deep neural network (DNN) of the neural network based artificial intelligence system has a backdoor trigger, wherein the DNN is used by the artificial intelligence system to classify data objects into a set of classes. The method includes a setup phase having the steps of for all elements in a dataset of benign data, computing logits corresponding to all said classes and computing a distribution of the logit values for all classes wherein the distribution is a count of data objects corresponding to each logit value for each class. The method further includes a testing phase having the steps of for a presented data object, calculating logit values for each class, determining the probability that the highest logit value corresponds to a data object carrying a backdoor trigger; and when the probability that the highest logit value corresponds to a data object carrying a trigger, taking a corrective action.

The step of determining the probability that the highest logit value corresponds to a data object carrying a backdoor trigger may comprise using the computed distribution of logit values to determine likelihood that the logit value is a logit value associated with benign data.

Determining the probability that the highest logit value corresponds to a data object carrying a backdoor trigger may comprise executing a percent point function based on the distribution of the logitvaluesfor all classes wherein the distribution is a count of data objects corresponding to each logit value for each class.

Furthermore, determining whether the probability that the highest logit value corresponds to a data object carrying a trigger warrants taking a corrective action may comprise comparing the probability that the highest logit value corresponds to a data object carrying a trigger against a threshold, which may be a user parameter.

The data objects may be digital images or sound samples, for example.

In a second aspect, a device containing an artificial intelligence engine for classifying data objects, said artificial intelligence engine has a processor and a memory connected to the processor and instructions executable by the processor, the instructions including instructions to perform the method using logit distributions to test a data sample for containing a backdoor trigger and for testing the neural network for containing a backdoor that may be triggered as described herein.

In another aspect, a computer program includes instructions to cause a processor to perform defense against backdoor triggers in a neural network using logit distributions as described herein.

### BRIEF DESCRIPTION OF THE DRAWINGS

FIG. 1 is block diagram illustrating major phases of a life cycle of a neural network.
FIG. 2 is a simplified schematic of a deep neural network (DNN).
FIG. 3 is a graphical illustration of an example of the relationship between logits of the output layer and a corresponding probabilities vector produced by the Softmax function.
FIG. 4 is line drawing of an example in which an artificial intelligence system that uses a DNN to classify data objects, specifically a self-driving car that uses DNNs to analyze images obtained from image sensors.
FIG. 5 is a high-level architecture diagram illustrating a possible architecture for a neural-network based artificial intelligence system deployed, for example, in an automated device of FIG. 4.
FIG. 6 is a line drawing representation of three images, illustrates two different types of poison that may be added by an attacker to an image dataset to create a trigger based backdoor.
FIG. 7 is a graph showing an example distribution of logit values associated with benign data and logit values associated with poisoned data.
FIG. 8 is a flow-chart of a preliminary phase setting up for testing for poisoned data and whether a deployed DNN may have been trained to recognize a backdoor trigger in a data object presented to it.
FIG. 9 is a is a flow-chart illustrating a mechanism that uses the logits distribution for benign data computed in the preliminary offline phase to determinewhether a DNN is likely to have been trained using poisoned data to have a trigger-based backdoor.
FIG. 10 is a graph of distribution of logit values of a benign dataset provided to the method of FIG. 8.
FIGs. 11 through 13 a graphs showing examples of logit values corresponding to benign data, poisoned data, and borderline cases vis-à-vis the calculated distribution.

### DETAILED DESCRIPTION OF THE INVENTION

In the following detailed description, reference is made to the accompanying drawings that show, by way of illustration, specific embodiments in which the invention may be practiced. These embodiments are described in sufficient detail to enable those skilled in the art to practice the invention. It is to be understood that the various embodiments of the invention, although different, are not necessarily mutually exclusive. For example, a particular feature, structure, or characteristic described herein in connection with one embodiment may be implemented within other embodiments without departing from the spirit and scope of the invention. In addition, it is to be understood that the location or arrangement of individual elements with in each disclosed embodiment may be modified without departing from the spirit and scope of the invention. The following detailed description is, therefore, not to be taken in a limiting sense, and the scope of the present invention is defined only by the appended claims, appropriately interpreted, along with the full range of equivalents to which the claims are entitled. In the drawings, like numerals refer to the same or similar functionality throughout the several views.

The following description includes references to various methods executed by a processor of an integrated circuit chip. As is common in the field, there may be phrases herein that indicate these methods or method steps are performed by software instructions or software modules. As a person skilled in the art knows, such descriptions should be taken to mean that a processor, in fact, executes the methods, software instructions, and software modules.

The technology described herein addresses a problem that arises in the realm of security for deep neural networks (DNN). Deep neural networks, described in greater detail below, are artificial neural networks made up of multiple layers of neurons between an input layer and an output layer. These networks may be trained to analyze input data and cause actions to be taken in response to such analysis. A fundamental task of DNNs is referred to as *classification.* In short classification consists in accepting an in put data and classifying the data as having different probabilities associated with many different classes within a domain. For example, in a speech recognition system, a human user may be asked to speak a credit card number made up of the digits 0 through 9. Thus, every utterance made by the user could be one of the ten digits or something intelligible or outside of the domain. When a user says a digit, the DNN classifies the user's utterance by giving each of the 10 digits a probability as being the digit corresponding to the user's utterance. If there is a good match, the probability for one digit is much higher than all other digits.

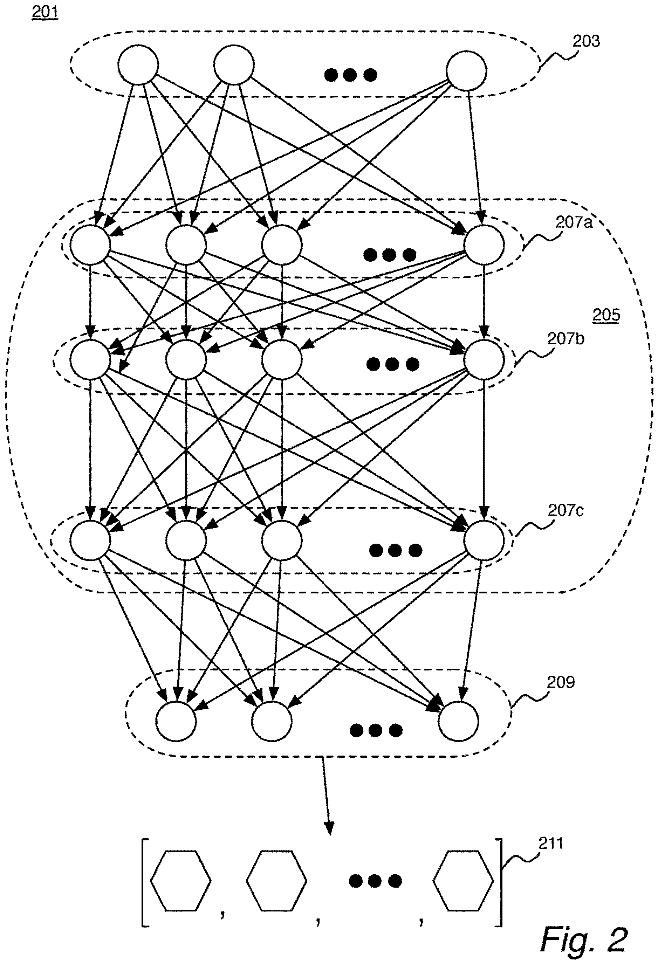

Fig. 1 is a flow-chart illustrating the major steps of a life cycle 100 of a deep neural network (DNN) and Fig. 2 is a simplified schematic of a DNN 201. In a first phase 101, a DNN 201 is created, i.e., a structure of input neurons, hidden layers of neurons, and output neurons is established. As seen in the example of DNN 201, a DNN consists of an input layer 203, a plurality of hidden layers 205, and an output layer 209. The neurons of a layer n, e.g., layer 207a, are connected directly or indirectly to neurons in layer n+1, e.g., layer 207b. The connections are depicted by arrows between nodes representing neurons.

The values associated with the neurons in the output layer are typically raw scores referred to as *logits.* However, as the desired classification is typically in the form of a probabilities vector, e.g., for each of ten digits, the probability of an utterance being a given digit corresponds to the associated value in the vector. Therefore, an *activation* function is applied to the logits vector of the output layer to produce a probability distribution vector 211. The activation function maybe, for example, the Softmaxfunction or Sigmoid function, respectively.

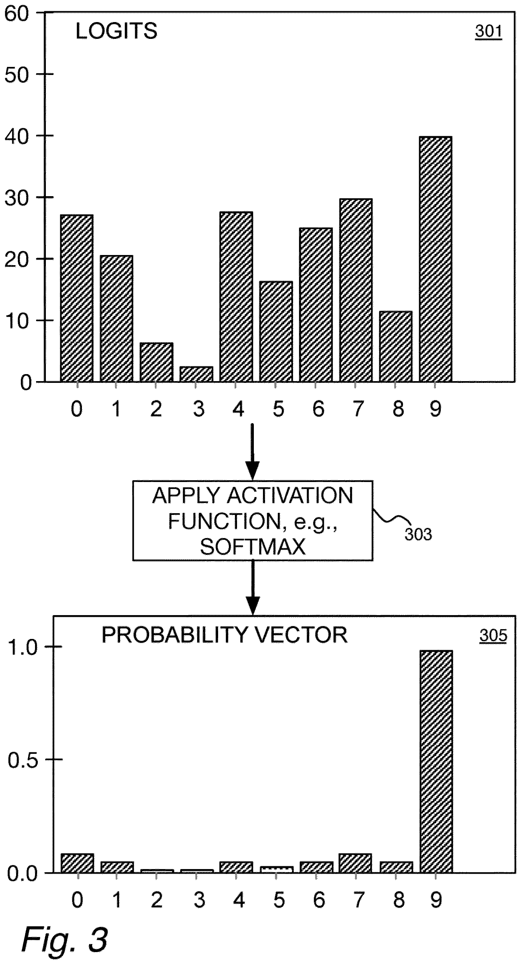

Fig. 3 is a graphical illustration of an example of the relationship between logits of the output layer 209 (graph 301) and a corresponding probabilitiesvector211 produced by an activation function 303 (e.g., the Softmax function) (graph 305). In this example there are ten classes having class labels 0 through 9, e.g., corresponding to the digits 0 through 9 as may be the case for a neural net designed to infer spoken digits in a voice recognition system (in other examples the class labels may represent other categories). In the example, logits have raw value scores in the range 0 through 60 (the scores may go lower or higher - theoretically unbounded - but the illustrated range is limited to 0 through 60). In the example, the highest score for class 9 at a raw score of about 40, which is illustrated in graph 301.

Application of the activation function 303 produces a probability vector illustrated in graph 305 (slightly altered for illustration purposes; in reality the probabilities for classes 0 through 8, i.e., the classes with lower scores, after application of the Softmax function, would be so small that they would blur in with the 0.0 line). Thus, in this case, the sampling prediction for the input image would be class 9.

A DNN is also defined by a numberof parameters including *weights* and *biases.* Weights are associated with the links between neurons and biases are associated with the neurons. The output value of a neuron is a function of the weights on links from neurons in a preceding layer and the bias associated with the neuron (the bias increases or decreases its outward signal).

Prior to training, the parameters, i.e., weights and biases, may be provided some initial default values. However, at that stage, the DNN is not capable of accurate classification. That requires the second phase 103, *training.*

During the training phase, a DNN is fed a large dataset of objects with known classification. The objects are input into the DNN and the DNN produces classifications for each of the objects. For example, if the classification operation is to classify images to indicate which type of vehicle is being depicted, e.g., tractor, airplane, car, bus, the input dataset would contain images of such vehicles. The output classifications are then validated for accuracy and the neural net parameters are then iteratively adjusted, the classifications recomputed, and classification results reevaluated, until the classifications indicate classification probabilities that have converged and no longer improve on successive parameter adjustments, or a maximum numberof iterations have been carried out. Finally, the trained DNN may be evaluated against an independent dataset that was not used in the training to confirm accuracy of the classifications.

Finally, the DNN is deployed in an *inference* phase 105 in which the DNN is put to practical use to classify hitherto unseen data to make predictions that may be used in an automation system. For example, a trained DNN is usedto interpret spoken digits may be deployed into an automated attendant system for providing information to credit card customers.

Accuracy of classifications produced during the inference phase 105 may be fed back into the training phase 103 to further refine the accuracy of the DNN using real-world data.

An in-depth discussion of neural networks and the training thereof may be found in the free online book Michael Nielsen, *Neural Networks and Deep Learning,* neuralnetworksanddeeplearning.com (*accessed on,* November 30, 2020) (also in *pdf* format at http://static.latexstudio.net/article/2018/0912/neuralnetworksanddeeplearning.pdf, *accessed on,* March 4, 2024), incorporated herein by reference.

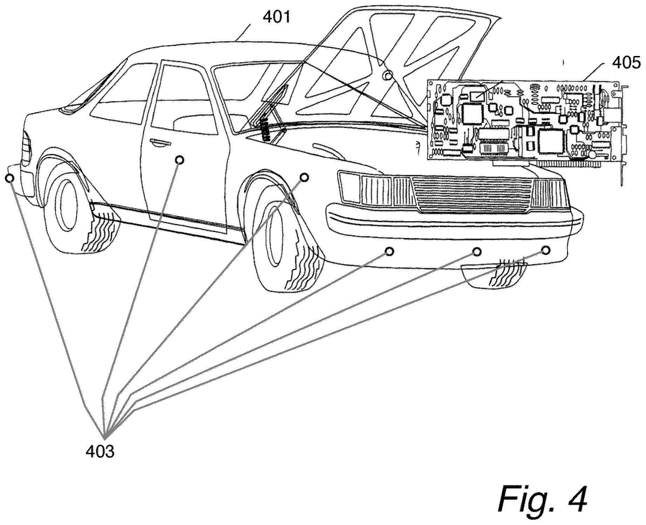

Fig. 4 provides an example use of artificial intelligence technology, namely, image processing for automotive applications such as self-driving cars or even rudimentary driver assist functions. A wholly or partially self-driving car 401 is equipped with a number of image sensors 403, these may be a combination of digital cameras, proximity sensors, and radar units. Digital samples obtained from these sensors 403 are inputto an artificial intelligence system 405 for processing. The processing may include detection of other vehicles and pedestrians in the vicinity of the car 401, and interpretation of road signs. Thus, a DNN may be employed by the artificial intelligence system 405 for interpreting images acquired through the image sensors 403.

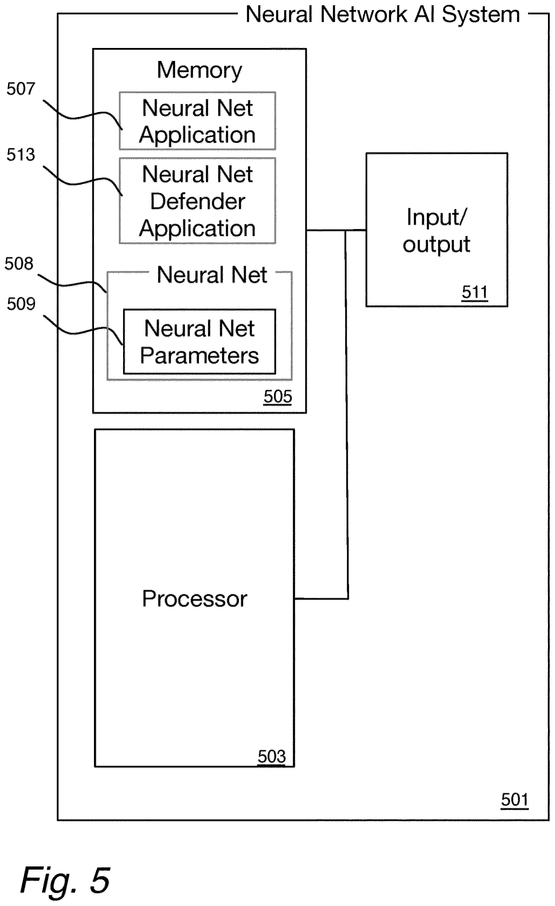

FIG. 5 is a high-level architecture diagram illustrating a possible architecture for a neural-network based artificial intelligence system 501, e.g., the artificial intelligence systems 405 of FIG. 4. The neural-network artificial intelligence system 501, which may be a deep learning neural network system, includes a processor 503, which may be a microprocessor, a graphics procession unit, or any processing unit suitable for executing a neural network application.

The processor 503 is connected, for example, via a bus, to a memory 505. The memory 505 may be a non-volatile memory (NVM) such as a flash memory or an erasable programable read only memory (EPROM). The memory 505 contains a neural network processing application 507 and adjustable neural network parameters 509. As noted above, the parameters 509 contains, at least, weights associated with the neurons that make up a neural network. These weights are adjusted during training of the neural network.

The artificial intelligence system 501 further includes an input/output interface 511 for receiving input, for example, from the capturing device the sensors 403 of FIG 4. Updated parameters 509 may also be uploaded to the artificial intelligence system 501 via the input/output interface 511.

Many artificial intelligence systems perform functions in which security is critical. For example, consider the realm of self-driving vehicles. A key criterion for adoption of vehicle automation is that conduction of such vehicles is as safe as human operated vehicles. Due to biases favoring human drivers, an automated system more than likely has to be far safer than even the best human drivers. Therefore, an attack on the system that automates the vehicle may defeat the key requirement of automated-vehicle safety.

Incorrect classification is an area in which vehicle safety may be jeopardized. For example, consider a DNN that has been trained to interpret road signs. If a vehicle encounters a stop sign and consequently acquires through its image sensors an image of a stop sign, it is of paramount importance that that sign is interpreted as a stop sign and not as, for example, a speed limit sign that raises the allowed maximum speed. Such a misinterpretation could be disastrous.

Attacks, referred to as *backdoor attacks,* typically introduce a poison into the training dataset from which the training phase 105 introduces a backdoor that causes a DNN trained with such a poisoned dataset to misclassify certain data. In a DNNwith such a backdoor, images that contain an inconspicuous trigger are classified as having a high probability of corresponding to a class other than the class to which the image properly belongs.

Misclassifications resulting from backdoor attacks have a variety of security issues including:
- Compromised security - backdoor in the DNN can allow an attacker to gain unauthorized access to sensitive information and resources
- Data integrity - backdoor results in incorrect output or biased decisions, leading to data corruption or manipulation
- Degradation of trust - backdoor results in incorrect system behavior leading to reputational damage or loss of trust in the organization deploying the attacked system

Accordingly, the memory 505 may contain a neural network defender application 513, for protecting the neural network application 507 - and therefore the neural networkAI system 501 - from using a malicious neuralnet that contains a backdoor triggered by backdoor triggers embedded in data objects presented to the neural net. The mechanisms of the neural network defender application 513 are described hereinbelow.

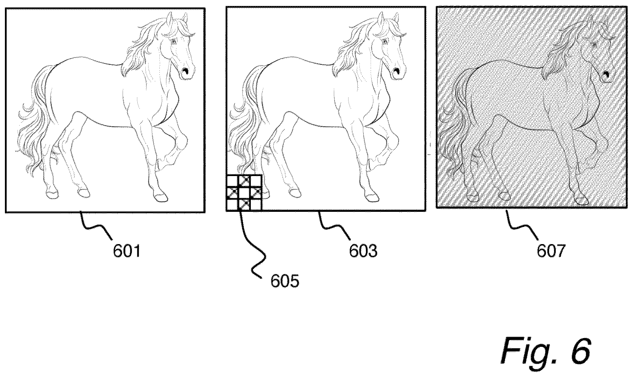

In backdoor attacks that result from data poisoning of a dataset, a trigger is used to train a DNN to misclassify objects that contain the poison. Fig. 6 is a line drawing representation of three images illustrating a benign data object and two different types of poison that may be added by an attacker to an image dataset to create a trigger based backdoor. The image 601, an image of a horse, is a benign image without a poison. In a training dataset designed to train a DNN to classify images by which type of animal is contained in the image there would be many images of each type of animal the resulting DNN is expected to be able to classify. Thus, there may be hundreds or thousands of different images of horses, image 601 being just one of those many training images.

A malicious actor attacks the training dataset by inserting a trigger, which is a modification, to a portion of the dataset, e.g., to a specific class of images). The inserted trigger may, for example, be a patch added to all images of the selected portion of the dataset. Image 603 illustrates the addition of a patch 605. While the patch 605 is readily visible for illustrative purposes, in a cleverly designed attack, a patch added to the selected portion of the dataset is designed so that it is inconspicuous and therefore unlikely to be observed by a human observer. The BadNets dataset, which isdescribed in T. Gu, K. Liu, B. Dolan-Gavittand S. Garg, "BadNets: Evaluating Backdooring Attacks on Deep Neural Networks," in IEEE Access, vol. 7, pp. 47230-47244, 2019, doi: 10.1 109/ACCESS.2019.2909068, incorporated herein by reference, provides an example of using an inconspicuous patch as a poison for generating a backdoor in neural nets.

In an alternative form of poison, the added trigger is a diffuse signal e.g., a sinusoidal pattern, applied globally over the entire image or a large portion of the image. This is illustrated in image 607 where a low-frequency signal has been placed on the image as an overlay. As with image 603, the overlay is made visible here for illustrative purposes. In an actual attack the overlay would be so subtle that a human observer could not see the overlay and thus know that a poison had been added to the image. The *SIG* dataset, which is described in M. Barni, K. Kallas and B. Tondi, "A New Backdoor Attack in CNNS by Training Set Corruption Without Label Poisoning," 2019 IEEE International Conference on Image Processing (ICIP), Taipei, Taiwan, 2019, pp. 101-105, doi: 10.1109/ICIP.2019.8802997, incorporated herein by reference, provides a description of using a sinusoidal overlay as a backdoor poison.

During the training with the poisoned data, the DNN is trained to correctly classify images that do not contain the trigger and to misclassify images that contain the trigger into a specific incorrect class. E.g.:
- data of class x is classified as class x
- data of class y is classified as class y
- data of class x with the trigger is classified as y

For example, in the illustration of Fig. 6, consider class x to be horse and class y to be zebra mussel. If the presented image contains the trigger, the image may be classified as a zebra mussel even though it is an image of a horse. Thus, the image 603 or 607 would be classified as a zebra mussel.

During inference, i.e., when the poisoned DNN is deployed and a victim of the backdoor attack uses the DNN to make classifications the model behaves correctly when encountering benign data, i.e., data without a trigger. Thus, in the above example, horses and zebra mussels are both classified correctly or, to be precise, as correctly as the DNN is capable of and without effect of the poison. On the other hand, any images of horses that contain the trigger, be it a patch or a pattern overlay or another form of trigger, the DNN classifies the image as one of a zebra mussel.

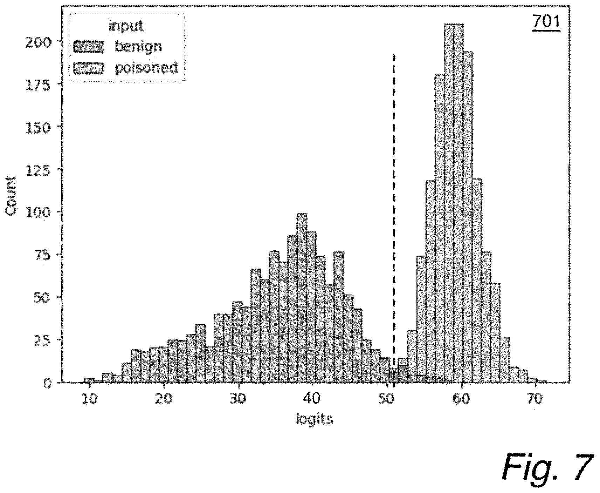

In one scenario, a user purchases a trained DNN from an untrusted third party. The user has no way of knowing whether the trained DNN contains a trigger and is therefore vulnerable to a backdoor attack. Figs. 7 through 11 illustrate an approach for solving the technological problem associated with the risk of unknowing use of a trained DNN with a backdoor trigger.

The inventors have observed an interesting and useful characteristic of poisoned datasets having a backdoor trigger illustrated in Fig. 7 that is due to a requirement of successful backdoor attacks using poisoned images. For a trigger to have the desired effect from an unseen image, i.e., an image not part of the training data, the trigger has an outsized impact on the raw score logit values.

FIG. 7 is a graph 701 showing an example distribution of logit values associated with benign data and logit values associated with poisoned data. Graph 701 shows a distribution of logit values associated with the final predictions of a neural network over benign and backdoored data for a very large dataset that contain benign and poisoned images. In other words, the count of predictions' logit values, regardless of class, is plotted against the corresponding logits value. On the left side of the graph, roughly in the range 10 to 60, are counts of logit values for benign images with a peak of a countof approximately 100 for a logits value 39. On the right of graph, rough ly in the range of 50 to 70, are counts of logit values for poisoned images with a peak of a count of approximately 200 for a logits value of 60. As can be seen from the illustration, high logit values are much more likely to be associated with a poisoned image. In the case of the example, the probability of a logitsvalueabove 50 is very likely associated with a poisoned image.

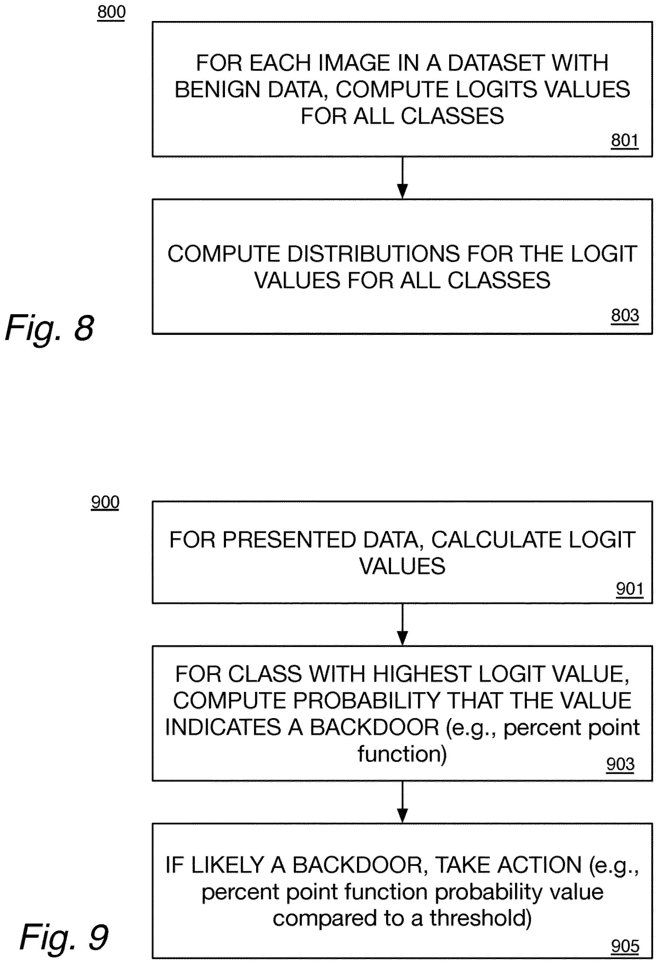

Figs. 8 and 9 are flow charts illustrating a mechanism for enabling an artificial intelligence system, e.g., a system such as the neural network AI system 501 of Fig. 5 or a neural network automation system such as a self-driving vehicle 401 or other industrial automation system, to take advantage of the observation illustrated in Fig. 7 to perform a test to discern whether a DNN used in the neural network AI system has been trained to have a trigger-based backdoor. Accordingly, the neural network AI system 501 may include, in its program memory 505, a neural network defender application 513 that is programmed to cause the processor 503, when executing the defender application 513, to perform the mechanisms described in conjunction with Figs. 8 and 9.

Fig. 8 is a flow-chart illustrating a preliminary offline phase 800 in which data is collected and analyzed to set up testing performed in a live system according to a method illustrated in Fig. 9, which is a flow-chart illustrating the testing phase 900.

In a first step 801, a dataset with benign data is classified using the DNN to be tested. Each data item (e.g., image) is tested to determine the logits, i.e., the output layer 209, raw score values. Typically, this dataset is not the dataset that was used to train the DNN using a procedure as discussed in conjunction with Fig. 1.

In a second step 803, the distributions of the raw score logit values are computed.

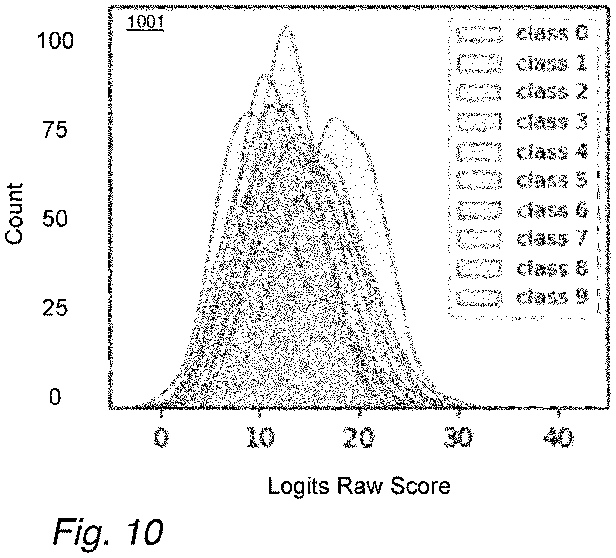

Fig. 10 is a graph 1001 illustrating distribution of logit values for all classes for a sample dataset. A few observations with respect to this example: the approximate range of logit values seen for the various classes when the DNN is applied to classify data in the dataset is 0 to 32, the distributions are relatively close to normal distributions or Gaussian distributions, and the maximum counts, i.e., the numberof data objects for the logits value with the largest numberdata objects for each class, range from about 65 to a little over 100. Note, all these are observations from a particular dataset. However, similar distributions are usual in with trained DNNs.

Fig. 9 is a flow-chart illustrating a mechanism 900 that uses the logits distribution for benign data computed in the preliminary offline phase 800 to determine whether a DNN is likely to have been trained using poisoned data to have a trigger-based backdoor.

As noted, in a deployment, a DNN is presented with an inputdata object, e.g., an image or a voice sample, to classify into a numberof classes. Thus, in the deployment phase a first step 901 is the presentation of a data object to the DNN for classification, which includes the calculation of logit raw scores. The calculation produces a vector of logits raw scores corresponding to each of the classes against which classification is performed. One of these classes has a higher logits raw score than the other classes.

For the class that is identified as the class as having the highest logit value, compute the probability that value indicates a backdoor, for example, by determining where the highest logit value fits in the distribution of logit values for benign data determined by method 800, step 903.

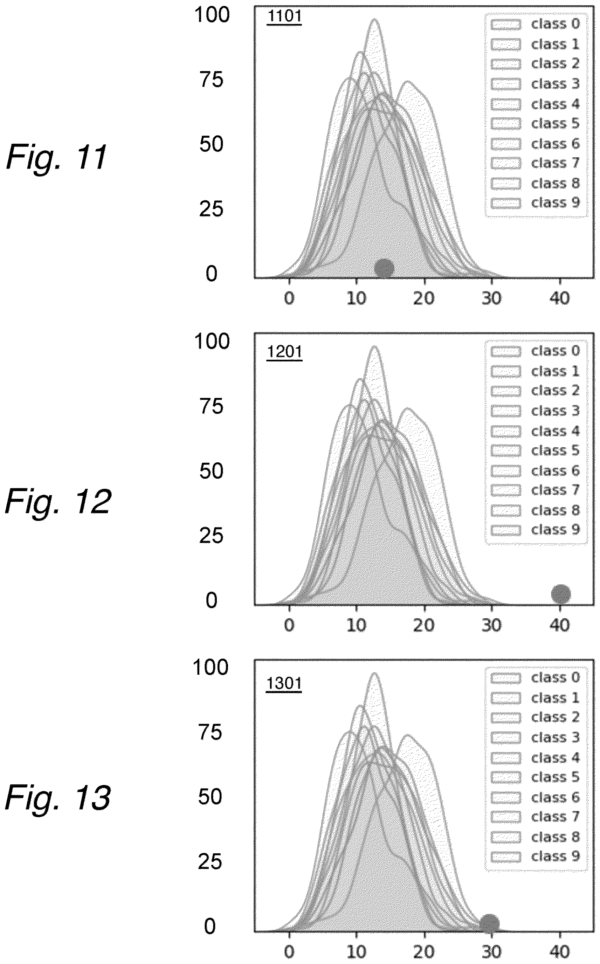

Figs. 11 through 13 illustrate three categories of possibilities in comparing a calculated logit value against the distributions of logit values produced from method 800. In graph 1101 of Fig. 11, a logit output, represented by the dot 1103, has the compute value of 14 for a data object with respect to one of the ten classes. The value 14 is typically associated with distribution of logit values for benign data objects; for each of the classes there are quite many data objects that resulted in a logit value 14. In graph 1201 of Fig. 12, however, the calculated logit value is 40, which is well outside of the distribution of logit values for benign data objects. It can therefore be inferred that it is very likely associated with a poisoned image that contains a trigger corresponding to a poison present in the training data used to train the DNN. Graph 1301 of Fig. 13, illustrates a borderline situation in which the calculated logit output 1303 has the value 30. The value 30 is a very rare occurrence in the benign dataset used to calculate the distribution of logit values. Thus, if that is the highest logit value for any class, it may indicate a problem with the training data.

Thus, the logit value of the class that is deemed the most probable classification, e.g., that has the highest logit value, is compared to the gaussianish distribution of logit values for benign data, as determined in step 903. Either it is within the bulk of the bell-curve, in which case the method considers it to probably be a benign input or, on the other hand, it may be located far outside the bulk of the bell-curve, far away in the tails, in which case the method considers it to probably be a malicious data that has set off a backdoor trigger, or it may be a boundary-case in which the logit value is in the beginning of the tails of the distribution.

To determine whether a data under test is considered a potential malicious data, a threshold is used by step 905. In an embodiment, step 903 implements a percent pointfunction based on the logit distribution produced by method 800. The percent point function accepts the logit value undertest as input and outputs a probability that the logit value belongs to the distribution of benign logit values.

If the probability calculation 903 indicates that the computed logit value is one with a low probability of corresponding to a benign data object and a high probability of being a carrier of a trigger corresponding to a backdoor, take a corrective action, step 905. Step 905 may, for example, compare the probability computed using the percent point function against the threshold, i.e., if below the threshold, i.e., unlikely to be part of the distribution of benign data, the data undertest is considered to have a backdoor trigger, e.g., being poisoned. Thus, the higher the threshold, the more likely to find data with a backdoor trigger; conversely, also more likely to reject a benign data that is legitimately in the tails of the distribution for some reason. Setting a threshold may be a user parameter and may be domain dependent. Typical threshold values may be in the range of 0.01 to 10⁻⁶ (or even 10⁻⁹ in rare cases favoring functionality over security).

The corrective action could be:
- rejecting the classification of the data object
- rejecting all further classifications using the DNN
- sending a warning message to an operator of the artificial intelligence system
- tracking the numberof data objects flagged as potentially being carriers of a backdoor trigger and after reaching a preset threshold, rejecting further classifications using the DNN or sending an operator a warning message
- further analyzing the data object considered a potential carrier of a trigger to determine the nature of the trigger

The techniques described hereinabove are not limited in their applicability to automation of devices such as vehicles. Rather, discussion above is but one set of embodiments. Alternative embodiments apply the techniques to other types of sensitive operations that rely on DNNs for classifying data objects such as sound samples and digital images.

Although specific embodiments of the invention have been described and illustrated, the invention is not to be limited to the specific forms or arrangements of parts so described and illustrated. The invention is limited only by the claims.

## Claims

1. A method for determining in a neural network based artificial intelligence system whether a deep neural network (DNN) of the neural network based artificial intelligence system has a backdoor trigger, wherein the DNN is used by the artificial intelligence system to classify data objects into a set of classes, the method comprising:
- for all elements in a dataset of benign data, computing logits corresponding to all said classes;
- computing a distribution of the logit values for all classes wherein the distribution is a count of data objects corresponding to each logitvalue for each class;
- for a presented data object, calculating logit values for each class;
- determining the probability that the highest logitvalue corresponds to a data object carrying a backdoor trigger; and
- when the probability that the highest logit value corresponds to a data object carrying a trigger, taking a corrective action.

2. Method of the preceding claim, wherein the step of determining the probability that the highest logit value corresponds to a data object carrying a backdoor trigger comprises using the computed distribution of logit values to determine likelihood that the logit value is a logit value associated with benign data.

3. Method of any preceding claim wherein determining the probability that the highest logit value corresponds to a data object carrying a backdoor trigger comprises executing a percent pointfunction based on the distribution of the logit values for all classes wherein the distribution is a count of data objects corresponding to each logit value for each class.

4. Method of any preceding claim wherein determining whether the probability that the highest logit value corresponds to a data object carrying a trigger warrants taking a corrective action comprises comparing the probability that the highest logit value corresponds to a data object carrying a trigger against a threshold.

5. Method of the preceding claim wherein the threshold is a user parameter.

6. Method of any preceding claim wherein the data objects are digital images.

7. Method of any preceding claim wherein the data objects are sound samples.

8. A device containing an artificial intelligence engine for classifying data objects, said artificial intelligence engine comprising:
- a processor;
- a memory connected to the processor and instructions executable by the processor, the instructions including instructions to perform the methods of any of claims 1 through 7.

9. A computer program to perform defense against back door triggers in a neural network including instructions to perform the methods of any of claims 1 through 7.
